Europäisches Patentamt

European Patent Office

Office européen des brevets

(11) Publication number: **0 361 742**
**A2**

# EUROPEAN PATENT APPLICATION

(21) Application number: **89309384.9**

(22) Date of filing: **15.09.89**

(51) Int. Cl.⁵: **G02B 6/42**

(30) Priority: **30.09.88 GB 8823010**

(43) Date of publication of application:
**04.04.90 Bulletin 90/14**

(84) Designated Contracting States:
**DE FR IT**

(71) Applicant: GEC-Marconi Limited
The Grove Warren Lane
Stanmore Middlesex HA7 4LY(GB)

(72) Inventor: Leach, Edwin Frederick Walter
12 Chelmer Avenue Little Waltham
Chelmsford Essex CM3 3PB(GB)

(74) Representative: Cockayne, Gillian et al
The General Electric Company plc Patent
Department GEC Marconi Research Centre
West Hanningfield Road
Great Baddow, Chelmsford Essex CM2
8HN(GB)

(54) **Optical devices.**

(57) An optical device includes a laser diode 1, a monomode waveguide 2 in a substrate 3 and a matching region 4 located between them. The matching region 4 ensures that light emitted at high angles from a laser diode is transmitted to the waveguide 2.

EP 0 361 742 A2

## Optical Devices

This invention relates to optical devices and more particularly, but not exclusively, to a device which includes matching of a diode laser to a monomode optical waveguide.

It is difficult to provide good matching between a laser diode and an optical waveguide formed in a substrate because of numerical aperture mismatch and also because separate processes are involved which make it difficult to achieve good alignment.

The present invention seeks to provide improved matching between a laser diode and a waveguide.

According to the invention, an optical device comprises a laser diode, an optical waveguide, and a matching region between and adjacent to them having a width in one plane which increases from a first part adjacent to the laser diode to a second part of greatest width and decreases from the second part to a third part of smaller width adjacent to the waveguide. By employing the invention, a significant amount of light radiating at high angles from the laser diode may be collected and then guided into a narrower waveguide. Preferably, the boundaries of the matching region are smoothly curved in the plane in which its width changes.

In one advantageous embodiment of the invention, the width of the matching region at the third part is greater than that at the first part, although if the waveguide is narrower than the laser diode output aperture the width at the third part may be smaller. The waveguide may be monomode at the laser operating frequency and the matching region may be such that its part of greater width is capable of sustaining more than a single waveguide mode. Preferably, the greatest width of the matching region is less than three times the width of the waveguide.

Advantageously, the matching region has approximately the same refractive index as the waveguide, giving similar optical characteristics and conveniently, the waveguide and the matching region are fabricated by the same process.

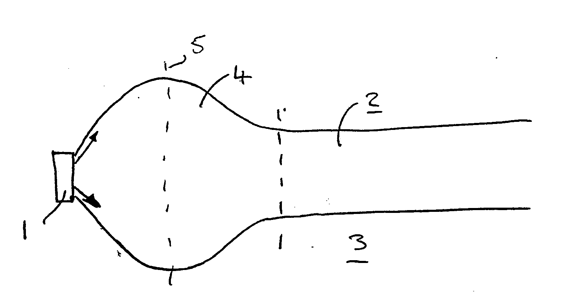

One way in which the invention may be performed is now described by way of example with reference to the accompanying drawing in which the sole figure schematically illustrates, in plan view, an optical device in accordance with the invention.

With reference to the Figure, it is wished to apply the output of a laser diode 1 to a monomode optical waveguide 2 formed in a substrate 3. A "bulbous" matching region 4 is located between the laser 1 and waveguide 2 and has smoothly curving edges. At its greatest width, indicated by broken line 5, the section 4 is about twice the width of the monomode waveguide 2. Light emitted at wide angles, as illustrated by the arrows, from the laser 1 tends to be confined within the guide 4 and channelled into the monomode waveguide 2.

The waveguide 2 and matching region 4 have the same refractive index and are fabricated by the same process.

## Claims

1. An optical device comprising a laser diode 1, an optical waveguide 2 and a matching region 4 between and adjacent to them having a width in one plane which increases from a first part adjacent to the laser diode 1 to a second part 5 of greatest width and decreases from the second part 5 to a third part of smaller width adjacent to the waveguide 2.

2. An optical device as claimed in claim 1 wherein the boundaries of the matching region 4 are smoothly curved in the plane in which the width changes.

3. An optical device as claimed in claim 1 or 2 wherein the width of the matching region 4 at the third part is greater than that at the first part.

4. An optical device as claimed in claim 1, 2 or 3 wherein the waveguide 2 is monomode at the laser operating frequency.

5. An optical device as claimed in any preceding claim wherein the matching region 4 at its part of greatest width is capable of sustaining more than a single waveguide mode.

6. An optical device as claimed in any preceding claim wherein the greatest width is less than three times the width of the waveguide 2.

7. An optical device as claimed in any preceding claim wherein the matching region 4 has approximately the same refractive index as the waveguide 2.

8. An optical device as claimed in any preceding claim wherein the waveguide 2 and matching region 4 are fabricated by the same process.

9. An optical device substantially as illustrated in and described with reference to the accompanying drawing.